# EUROPEAN PATENT SPECIFICATION

(11) **EP 0 737 864 B1**
(45) Date of publication and mention of the grant of the patent: **30.08.2000**
(21) Application number: 96850074.4
(22) Date of filing: 11.04.1996
(51) Int. Cl.: G01P 15/10

(54) **Force sensor**
Kraftmessaufnehmer
Capteur de force

(30) Priority: 12.04.1995 US 421673
(43) Date of publication of application: 16.10.1996
(73) Proprietor: SENSONOR ASA, 3192 Horten (NO)
(72) Inventor: Jakobsen, Henrik, 3183 Horten (NO); Kvisteroy, Terje, 3190 Horten (NO)
(74) Representative: Perklev, Karin Cecilia

(56) References cited:
- EP-A- 0 614 087
- DE-A- 3 814 952
- GB-A- 1 596 982
- US-A- 4 805 456
- SENSORS AND ACTUATORS, vol. 17, no. 1/02, 3 May 1989, pages 241-245, XP000118930 SATCHELL D W ET AL: "A THERMALLY-EXCITED SILICON ACCELEROMETER"

## Description

This invention relates to vibrating seismic sensors made of silicon for the measurement of forces, such as acceleration forces and fluid pressure forces caused by movement of liquids or gases. The influence of force is converted into a change in the resonance frequency of one of the resonance modes for a mass-spring system by using a new principle whereby the resonating vibrating structure itself is the force sensitive mass-spring system. An important field of application for such force sensors is accelerometers for automotive applications that can be fabricated by well known silicon micromechanics in fabrication methods.

Force sensors such as microaccelerometers built from silicon material have received a great deal of attention over the past few years, mainly due to a fast increasing market penetration into automotive applications such as crash sensors for safety systems like air-bag and seat-belt tensioners, acceleration measurement devices for new generations of anti-lock breaking systems (ABS) and active suspension systems. A review of low cost accelerometers is given by G. A. MacDonald: "A Review of Low Cost Accelerometers for Vehicle Dynamics"; Sensors and Actuators, A21-A23 (1990), 303-307. The prior art of silicon microaccelerometers cover capacitive types such as described in U.S. Pat. no. 4,679,456 and piezoresistive types such as described in DE 3814952.

Generally, in a typical accelerometer, a mass is suspended to one cantilever spring or to two or more springs attached to opposite sides of the mass. The mass is maintained in a neutral position so long as the system is in rest or in a motion of constant velocity. When the system undergoes a change in velocity, the spring mounted mass will at first resist the movement because of its inertia and set up additional force in the springs. When the acceleration is in a direction perpendicular to the plane of the springs, the inertia created force of the proof mass will cause bending of the springs. Capacitive accelerometers are designed to detect deflection of the mass. In piezoresistive accelerometers, stress sensitive resistors are built on the surface of the springs.

Resonant sensors are attractive for precision measurements, because the frequency of a mechanical resonant structure can be made highly sensitive to mechanical signal inputs such as acceleration, force and flow. Microaccelerometers having resonant micro bridges are known. This principle is very attractive when built in single crystal silicon since the temperature coefficient related to sensitivity will mainly be caused by the drift in the elastic properties of silicon. Around room temperature the stiffness decreases with increasing temperature with less than 100ppm/degC. Designs that can be built into silicon is also very attractive due to the low-cost batch processing of silicon wafers. A high Q-factor is needed for the vibration mode being used to obtain good resolution in the detected frequency signal.

Prior art inventions in this field of technology are described in WO 92/14160 (R. Hulsing, Sundstrand), U.S. Pat. no. 4,945,773 (E. N. Sickafus, Ford), U.S. Pat. No. 4,805,456 (R.T. Howe et.al.) and U.S. Pat. No. 4,893,509 (MacIver et al, G.M). The first two mentioned references disclose a separate vibrating resonating structure coupled to the seismic mass-spring system mechanically (Hulsing) or via electrostatic force (Sickafus). In the two latter references, there are disclosed vibration modes which are set up in the springs holding the proof mass. The excitation of the vibration modes are by electrostatic force (Howe et al. and MacIver et al.) and detection by sensing of changes in capacitance. This method is also described by S.C.Chang, M.W. Putty, D.B. Hicks, C.H.Li and R.T.Howe: "Resonant-Bridge Two-axis Microaccelerometer"; Sensors and Actuators, A21 - A23 (1990) 342-345. The inventions described by Hulsing and Sickafus make use of a separate vibrating resonating structure coupled to the seismic mass-spring system mechanically (Hulsing), or via electrostatic force (Sickafus). These inventions differ much in their nature from the present invention due to the fact that the proof mass and the springs of these prior art devices are separated from the resonating structure.

Further related prior art is disclosed in EP-A-0 614 087.

The inventors of the present invention have recognized the following disadvantages and limitations of the prior art: Since the prior art seismic system is not continuously moving, the structures do not include inherent self-tests. The use of two separate mass-spring systems makes processing more complex, thereby adding to the cost. A more complex design will also result in a larger number of possible catastrophic failure modes during production of the device and during the product life-time.

Setting up vibrations in the springs of the seismic mass-spring system as shown by Howe et al. and by MacIver et al. represent a further step in microsensor integration compared to Hulsing and Sickafus. The embodiment of McIver et al. as shown in fig. 1 of U.S. 4,893,509 consists of a plate type stiff central proof mass of silicon and gold supported by four identical silicon springs on each side of the four-sided mass. The springs are anchored to a silicon substrate. The disclosed embodiments are designed for excitation by electrostatic force and detection by capacitance change. The embodiments are further based on the principle that the resonance frequency increases in beams under increased tension and decreases in the beam under compression when acceleration forces act on the springs in the plane of the springs. Change in the difference between these two resonance frequencies is the measure of acceleration. Excitation is by electrostatic force and detection by capacitance change.

The present inventors have however recognized the following disadvantages and important limitation of the latter prior art:

In order to make the embodiment on a small silicon chip to obtain low cost manufacturing the capacitors used for detection will have to be very small in size and therefor also have a small capacitance value since both excitation and detection must be done on the spring elements. This makes the prior art embodiment sensitive to parasitic signals from other parts of the electronic circuitry through stray capacitances and sensitive to noise sources. In addition, electrostatic excitation/detection relies on strict control of small air gaps. Particle contamination is a problem of great concern in processing of such devices, in particular during dicing and packaging. Stitching of the flexible parts to the opposite surface is a problem that may happen during etching of sacrificial layers and in heavy overload situations after release of the micromechanical structures. This may happen in the later production steps hereby turning out as yield problems or even lead to catastrophic failures during transport and handling and hereby causing problems for customer and end-user. A third limitation in the prior art embodiment is related to using the fundamental frequency mode (half-wave) of a linear spring which has a relatively low Q-factor in the range 50 to 200 at atmospheric pressure due to the relatively large deflections for this fundamental frequency mode. Reduced pressure is necessary to obtain the high Q-factor needed for solution with high dynamic range and high resolution. A design goal for a robust ±2g accelerometer for ABS or suspension and ±50 g for air-bag is high resistance to the mechanical shocks that may happen during handling usually tested by a 1.2 m drop-test. Additional cost is a result when the resonating structure must be built into a cavity with low pressure/vacuum inside. Possibilities for leaks is an important quality concern if the product must be kept at low pressure over a life-time in the range of 10 to 20 years. A further limitation of the prior art embodiment is related to self-test. Since only the springs which support the proof mass are set into vibrations and the proof mass is not continuously moving, the prior art does not involve a direct test of the consistency of the proof mass. The prior art solutions consist of several individual spring-mass systems. The vibration of the springs is controlled by the stiffness of the spring and the mass of the spring and not the proof-mass. In addition to this the realization of a sensor based on several separate vibrating systems may cause cross-talk between the different resonance frequencies, which in some cases may ultimately end in mode jumping, an abrupt jump between two lightly damped modes within the same frequency window.

It is an object of the present invention to provide a resonant micro bridge accelerometers that are robust, durable and can be manufactured at low cost in order to meet automotive production requirements. It is a further object to provide embodiments that intierently have self-test features to provide reliable operation in a safety system such as an airbag deployment system.

It is a further object of the present invention to provide for designing and fabricating of force sensors according to the invention for measuring forces set up by fluids, e.g. air or gases, in motion

In accordance with the preferred embodiments of this invention, these and other objects and advantages are accomplished as follows.

The inventive feature of the invention include the enforcing of a defined resonant vibrational mode in the entire force sensitive mass-spring system and not in the springs only, in contrast to the prior art. The mass-spring system may consist of one, two or more masses and two or more springs to support the masses.

In a first type of this invention, as defined in independent claim 1, vibrations are set up by translational or/and rotational movement of the mass using flexing/twisting springs. Acceleration or other external sources of force acting on the mass will change the stress in the springs hereby causing a detectable change in the stiffness of the springs resulting in a change in the resonance frequency of the enforced vibrational mode.

A second type of this invention, as defined in independent claim 9, is based on the proof mass being made thin and flexible or/and twistable. A resonant mode is set up as an "integrated" movement of the springs and the mass. Acceleration will change the mechanical stress and the stiffness of the springs and the mass and hereby causing a detectable change of the resonance frequency.

It should be emphasized that a single vibration mode is excited and made active for these two types of the invention in contrast to other solutions which simultaneously operate several modes/mode systems.

Excitation and detection of the force sensitive vibration mode can be done different methods of which (a) thermal excitation and piezoresistive pick-up with resistors integrated on the resonating structure itself and (b) electrostatic excitation and capacitive pick-up are considered to be preferred embodiments of the invention for low cost manufacturing. More generally, excitation can be done by the following well known methods within the science of sensor research and development:
(a) Thermal by location of resistive structures like semiconductor resistors or thin-film resistors, leading to thermal expansion forces due to thermal gradients.
(b) Thermal by laser spot focused on the structure by optics or via optical fiber.
(c) Dielectric force by using a nearby electrode system and setting up a voltage between the structure and the electrode system.
(d) Magnetic force by using a coil system.
(e) Piezoelectric by deposition of piezoelectric films.

Detection can be by:
(a) Capacitance change, differential or absolute.
(b) Piezoresistive.
(c) Piezoelectric.
(d) Interferometric by laser light.

As can be seen by persons skilled in the art, the preferred embodiments of this invention provide basis for developing many future modifications and variants of the invention.

Designing a force sensor by using the resonant structure itself as the acceleration sensitive seismic mass-spring system is the most ideal integration solution that can he used to accomplish a low cost solution by simplified processing and the possibility of designing a small sensor die.

With such a structure inherent self-test is built into the design in that continuos monitoring of the detection principle is a result of the inventive structure and that no additional test features are needed to test that the system is operative as a force sensor. This inherent self-test feature is of special importance for applications in safety systems. A very significant aspect of the invention is that this self-test feature does not add extra cost to the accelerometer.

Great flexibility exists in designing such an accelerometer. The number of springs, location of springs, geometry of springs and geometry of the mass can be varied to an almost infinite number of possible solutions made possible by micromechanics in silicon process technology and surface micromachining methods. The most important limitation is that the chosen vibrational mode must have a high Q-factor. Due to the complexity of designing the micromechanical structure of these new embodiments, extensive use of finite element computer modelling is needed to develop good designs having high sensitivity, resolution and linearity feature.

Accelerometers, flow sensors and force sensors designed by this principle can be processed by micromachining of single-crystal silicon combined with processes known from integrated circuit processing and manufacturing techniques. The embodiments may also be made by surface micromachining in poly-silicon and the use of sacrificial oxide layers.

The characteristic features of the present invention are defined in the attached patent claims. Further, preferred, non-limitative embodiments of the invention are described in the description below with reference to the attached drawing figures.

In the drawings:
Fig. 1 is an illustration of the present invention showing a 3-dimensional view with a mass-spring system supported on a thick frame;
Fig. 2 elucidates critical dimensions for the embodiment of fig. 1;
Fig. 3a shows movement and nodes of an acceleration sensitive resonant mode 9 of the mass-spring system for the example in fig. 2 and Fig. 3b) the shape of the movement of the centerline of the mass and springs for this same resonant mode;
Fig. 4 is a high-level block diagram of a more detailed first example of the embodiment of fig. 1 showing an accelerometer based on thermal resistive excitation and piezoresistive pick-up of resonant mode 9 as given in fig. 3;
Fig. 5 a-e show the main process steps of one method to build the structure of fig. 4 by using a combination of bulk micromachining and release of the mass-spring system by dry etching;
Fig. 6 a-e show the main process steps of a modified method to build the structure of fig. 4.
Fig. 7 shows as an example a second detailed embodiment of the invention using excitation and detection at the springs of the mass-spring system.
Fig. 8 shows as an example a third detailed embodiment of this invention comprising a resonating structure in single crystal silicon and using capacitive sensing and electrostatic force for excitation by placing plate-electrode on an insulating polysilicon plate located over and in close vicinity to the resonating structure;
Fig. 9 shows an electrode system and chip interconnection for the embodiment of fig. 8.
Fig. 10 a-f shows main process steps used to build the structure of fig. 8 by using a combination of bulk micromachining by etch-stop against PN-junction and use of surface micromachining in poly-silicon;
Fig. 11 shows as an example a fourth detailed embodiment of this invention comprising a resonant mass-spring system in deposited poly-silicon films and using capacitive sensing and electrostatic force for excitation by building an electrode system on both sides of the mass-spring system;
Fig. 12a) shows a pattern of excitation electrodes with their interconnections and Fig. 12b) shows capacitive sensing plates and their interconnections for the embodiment of Fig. 11; and
Fig. 13a-f) show main process steps used to build the structure of fig. 11 by using a sequence of depositing and etching patterns in poly-silicon layers and sacrificial oxide layers on both sides of the resonator.
Fig. 14 is a simplified circuit diagram for the embodiment of fig. 8.
Fig. 15 is a simplified circuit diagram for the embodiment of fig. 11.

As mentioned above the invention can be realized by many different geometrical designs and by different excitation and detection methods.

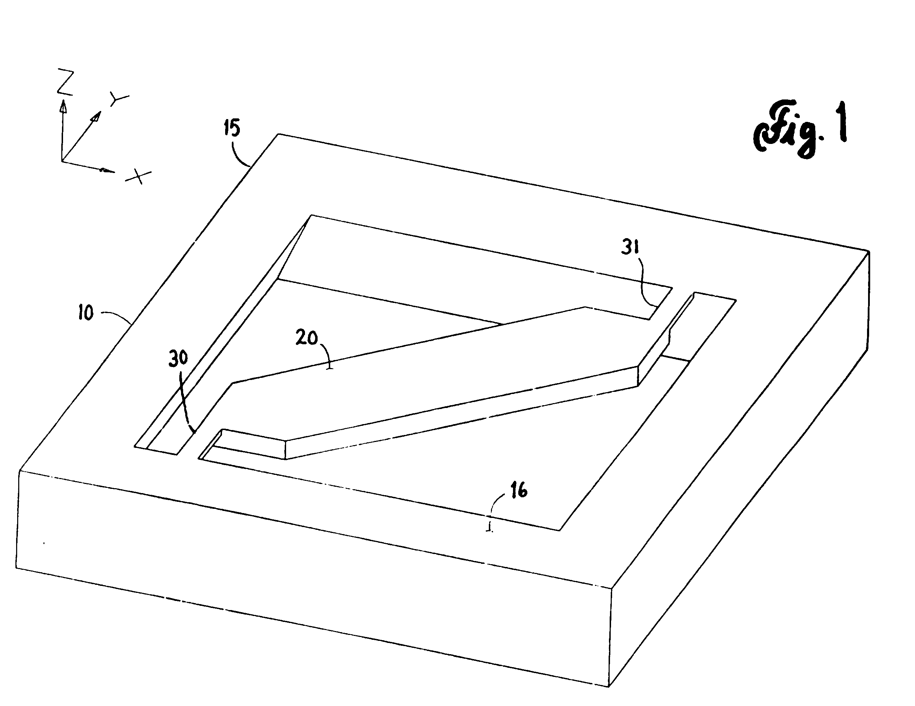

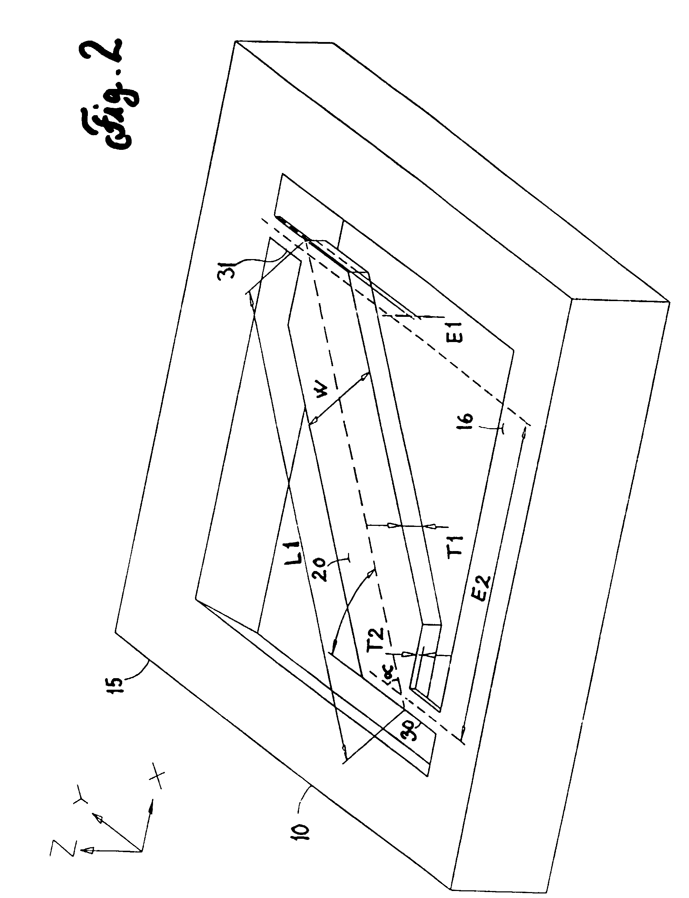

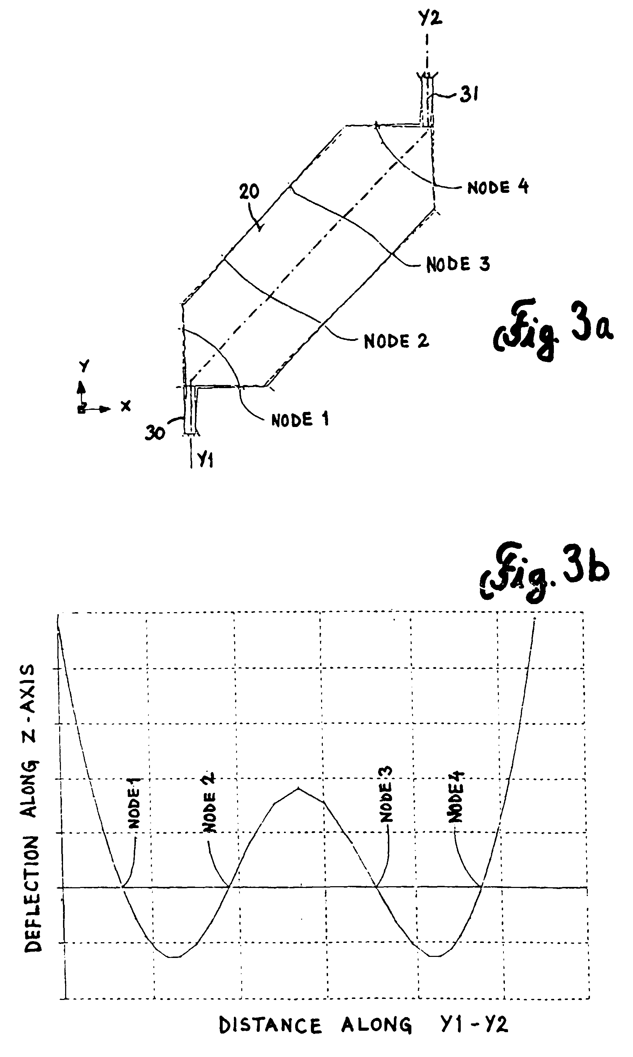

The invention claimed herein will be better understood from the following description of examples of preferred embodiments. Referring to fig. 1 a force transducer 10 is fabricated on a silicon substrate 15. The transducer is built with a flexible mass 20 suspended on two thinner flexible springs 30 and 31 at opposite ends of the mass, said springs being being fixed to a rigid frame 16 made from the silicon substrate 15. The flexible mass 20 of this embodiment has an oblong polygonal form and a certain thickness T1. The two springs 30 and 31 have a thickness T2 which is less than the thickness of the mass 20 and are located with their principal axis in the same direction Y and with one surface in the plane of one of the surfaces of the mass 20 as seen in Fig. 1, making a longitudinal midplane at the half thickness location of the springs 30 and 31 eccentric to a midplane of the mass 20. The geometry of this device will have an infinite number of linear and torsional resonant modes. Critical dimensions of the embodiment of fig. 1 are shown in fig. 2. The functionality of this embodiment acting as a force transducer relies upon the correct combination of the features shown in fig. 2; viz. (i) the eccentricity E1 of the midplanes of the springs 30, 31 and the mass 20 in the thickness direction, (ii) the eccentricity E2 of the springs 30, 31 and (iii) the orientation of the principal axes of the springs relative to the longitudinal direction of the mass 20 in fig. 1 defined as angle α. By choosing the thickness T2 of the springs 30 and 31 to be 3 micrometer, their length to be 145 micrometer and their width to be 34 micrometer, the thickness T1 of the mass 20 to be 20 micrometer, the length of the centerline of the mass to be 1020 micron and the width of the midsection of the mass to be 260 micron, it has been found a mode 7 resonance frequency of 412 kHz with an acceleration sensitivity of resonance frequency shift being 3.8 Hz/g. For a mode 9 resonance frequency of 697 kHz, the acceleration sensitivity was 10.3 Hz/g. Fig. 3a shows this design with the calculated node lines of mode 9 and with the corresponding movement of the midline through the mass and springs of mode 9 shown in fig. 3b. The damping of the resonant mode will be a function of gas pressure around the resonator giving the lowest damping and highest Q-factor in vacuum.

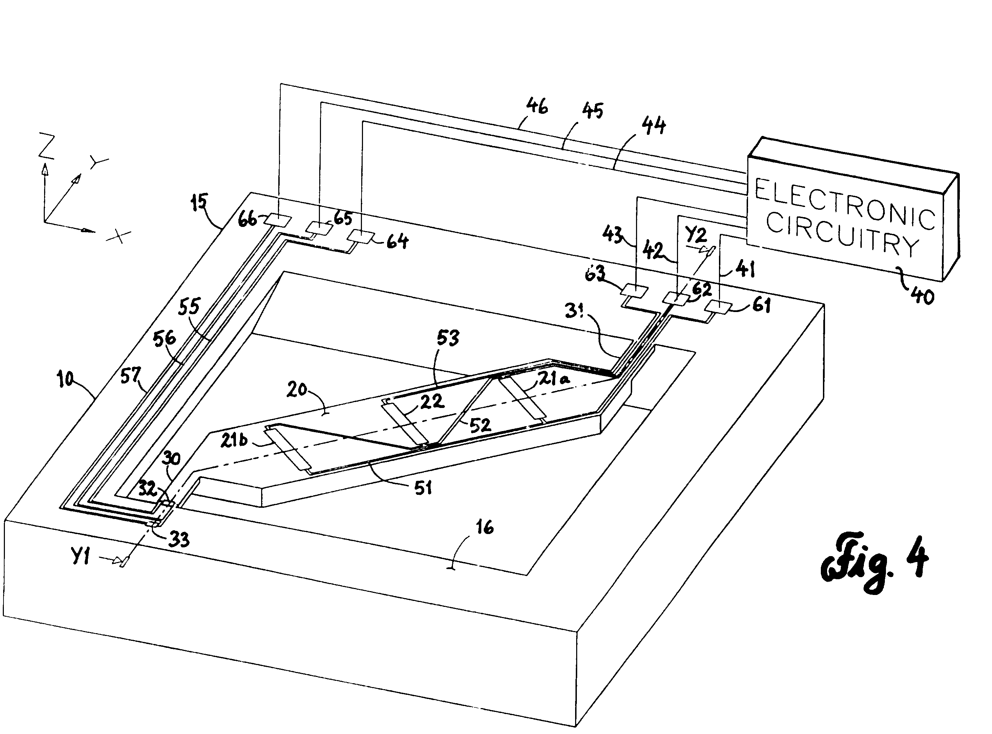

The preferred embodiment of fig. 1 can be realized by a variety of excitation methods and detection methods, e.g. as mentioned earlier. A more detailed example of the embodiment of fig. 1 includes the use of thermal excitation provided by diffused resistors and pick-up of the resonance frequency by the use of piezoresistive resistors. The embodiment will now be described for a structure designed to vibrate at resonant mode 9 as shown in fig. 3 and with reference to fig. 4. In fig. 4 excitation resistors 21a, 21b and 22 are integrated into the surface of the flexible mass 20. These resistors are located at the lines of maximum deflection of resonant mode 9 as shown in figures 3a and 3b. Electrical connections are made to these resistors by standard silicon integration methods using low-ohmic diffused conductors or thin film metal interconnections. Excitation resistors 21a and 21b are connected in parallel to interconnection lines 51 and 52 and terminated at wire bonding areas 61 and 62. The excitation resistor 22 is connected via interconnection lines 53 and 52 to the wire bonding areas 63 and 62. In this detailed example the excitation resistors are connected with a common reference via interconnection line 52 and wire bonding area 62 to reduce the number of interconnection lines to a minimum. The excitation resistors are coupled to electronic circuitry 40 via interconnection lines 41, 42 and 43. For detection of the resonant movement a piezoresistor 32 is located at the surface and near the end of the spring 30. A passive and matching resistor 33 is in this example located on the rigid peripheral area 16 of the silicon chip 15, thus forming a half measuring bridge located on the chip. The half-bridge is connected to the electronic circuitry 40 via interconnection lines 55, 56 and 57 on the chip 15, connections provided by wire bonding areas 64, 65 and 66 and interconnection lines 44, 45 and 46. Excitation at resonant mode 9 can now be done by forcing electric power pulses through the excitation resistors 21a, 21b and 22 at a frequency equivalent to the mass resonance frequency of resonant mode 9. Resistor 22 is pulsed with electric pulses 180 degrees phase shifted relative to the pulses provided to resistors 21a and 21b. The electric power consumed by the resistors will cause the respective areas of the flexible mass to be heated and expand by thermal expansion and in this way setting up mechanical forces in the mass-spring system 20, 30, 31 and forcing the resonating structure to vibrate at the frequency of resonant mode 9. It is obvious for persons with skills in this art that resistors 21a and 21b may also be coupled in series to obtain the same point heating effect. They may also be located at other areas on the mass-spring system. Detection of the mass-spring movement can be done either by single element piezoresistors or by half-bridge or full-bridge piezoresistor arrangements located on high stress areas on the flexing mass-spring system. When the complete mass-spring system is flexing in the resonant mode the mechanical stress in the piezoresistor 32 will change with the stress at this point, thus resulting in a signal at the output from e.g. the half-bridge 32, 33 that is varying with the resonance frequency of the mass-spring system. The output signal from the bridge is fed back to the electronic circuitry 40. The electronic circuitry 40 can be realized in many different ways. One well known way is to build as a phase-locked loop or self-oscillating loop that keeps the mass-spring system at its resonance frequency and that can be read with a proper output signal. When the mass-spring system is subjected to an acceleration force in the Z-direction perpendicular to the surface plane of the mass, additional forces are set up in the mass-spring system, thereby changing the detected resonance frequency detected. The detailed embodiment has as an example a linear response to acceleration forces in the Z-direction.

It is obvious for those skilled in this art that other resonant modes can be used by the mass-spring system by locating resistors in the same way at areas of maximum deflection for the particular resonant modes to be used to detect the load force. More generally, excitation at the acceleration sensitive resonant mode can be done by having one, two or more resistors on the mass-spring system, these resistors being pulse-heated at the frequency of the resonant mode to be excited and detection to be done by piezoresistors located at high stress areas on the vibrating structure and excitation and detection component to be built into a phase-locked loop or self-oscillating loop electronic circuitry.

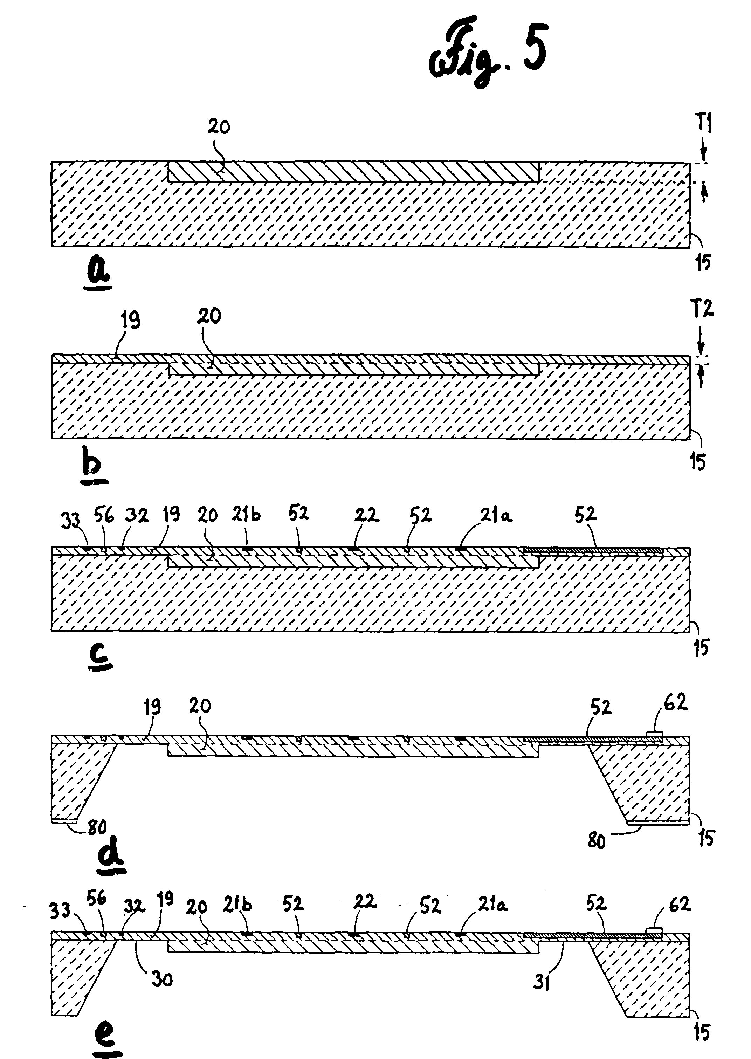

The force transducer of fig. 4 can be manufactured by using conventional silicon wafer processing method and silicon micromachining technology. Fig. 5e shows a cross-sectional view of the embodiment of fig. 4 along line Y1-Y2. The processing method is more specifically shown on fig. 5, with reference to cross-section Y1-Y2 of fig. 4. Processing is started on <1-0-0> P-type silicon substrate 15. The first two main steps are to form the thickness T1 of the mass 20 and the thickness T2 of the springs 30,31 as N-type areas to make possible selective etching of the P-type silicon and stop the etch against the PN-junction at a later step in the process sequence. By a standard first photolithographic masking and etching step the pattern of the mass 20 is defined, doped by ion implantation and diffused to the correct depth corresponding to mass thickness T1 as shown in fig. 5a. A second masking step defines an N-type area 19 that covers the complete surface of the device including the spring areas 30 and 31 and the area outside the mass periphery. This N-type area 19 is made by ion implantation doping followed by a drive-in diffusion step to diffuse the N-type dopant to the depth of the PN-junction corresponding to the spring thickness T2 of the layer 19 as given in fig. 5b. It is obvious for those familiar with silicon process technology that this N-type layer can also be made by growing an epitaxial layer followed by doping the P-type contact for the P-electrode by a separate masking and boron doping step. Excitation resistors 21a, 21b, 22, piezoresistor 32 and passive resistor 33 can now be diffused into the surface of the N-doped layer as P-type resistors and interconnection lines 51, 52, 53, 55, 56 and 57 as low-ohmic P-type diffusions by conventional silicon processing as the next steps, as shown in fig.5c. The next step is to make metal connection areas 61, 62, 63, 64, 65, 66 and to use a selective etch that is stopping against the PN-junction between the P-substrate 15 and the N-type mass 20 and N-type spring areas 30, 31 by using proper well known masking techniques such as silicon nitride 80 as shown in fig. 5d. This is now followed by a dry silicon etch through the thin N-area around the mass-spring hereby releasing both the mass 20 and the springs 30 and 31 of the device as shown in fig. 5(e). This completes the processing of this detailed example of the embodiment of the invention and the force sensor can now be built into a force sensor cavity package or integrated into a package together with the electronic circuitry 40.

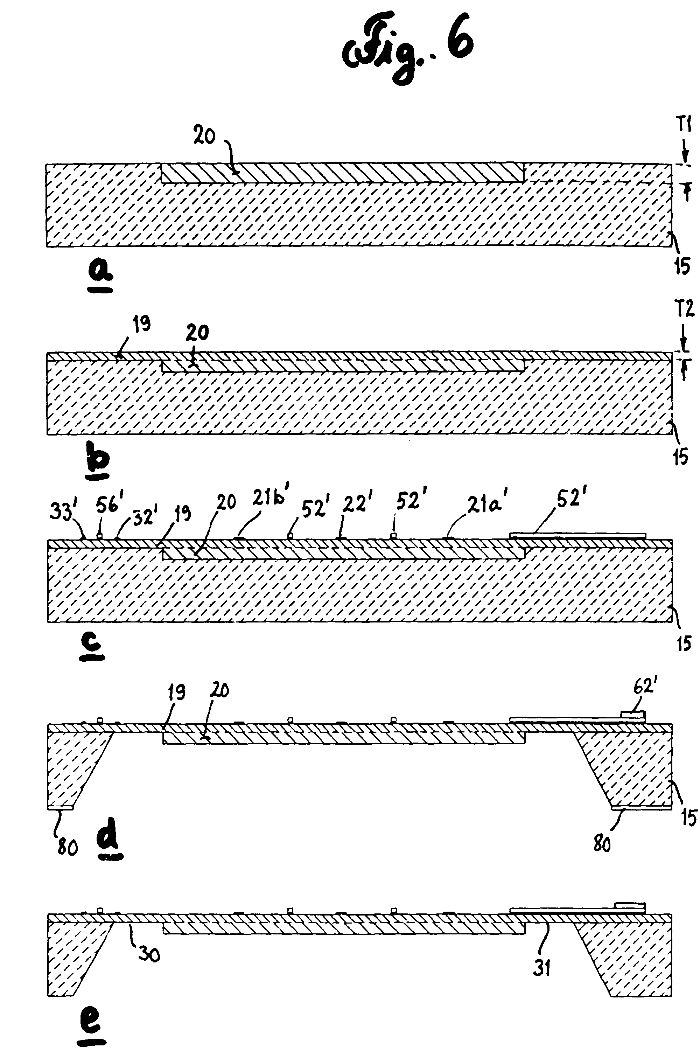

Fig. 6 shows a modified method of that just explained for the method of fig. 5. Steps of figs. 6a and 6b are the same as for figs. 5a and 5b. In the step of fig. 6c, contrary to that of fig. 5c, the excitation resistors 21a', 21b', 22', the piezoresistor 32' and the passive resistor 33' are made from deposition of thin film-resistances in a manner known to any expert in the art. Similarly, conductor films 52' and 56' are deposited in a manner known to any expert in the art, the exact dimensions of the resistors and conductors being determined through conventional etching process. In the stops of figures 6d and 6e, a similar etching process as that explained for figures 5d and 5e is carried out.

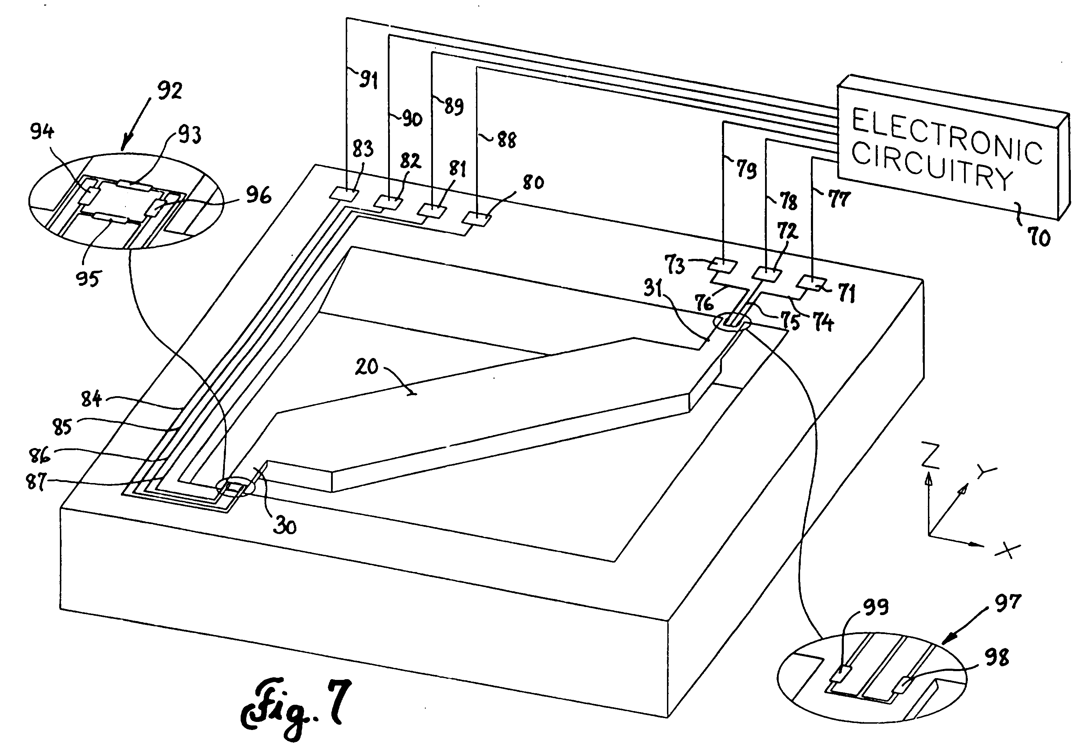

Fig. 7 is a variant of the embodiment of fig. 4, the basic difference being that excitation is created at one of the springs 31 and detection is made at the other spring 30. Electronic circuitry 70 is provided to connect to an excitation assembly 97 and a detection assembly 92. The excitation assembly shown in the high level block electronic circuit of fig. 7 includes two resistors 98 and 99, either of diffused or deposited, thin-film type resistors. The resistors 98 and 99 have a common connection to contact area 72 via interconnection line 75. Resistor 98 connects with contact area 71 via interconnection line 74. Resistor 99 connects with contact area 73 via interconnection line 76. The electronic circuitry 70 connects with contact areas 71, 72 and 73 via respective wires 77, 78 and 79 to provide resistors 98 and 99 selectively with pulsating current to create a vibration mode in the beam mass 20, said vibration mode detectable by assembly 92. The detection assembly 92 has piezoresistors 93-96 connected in a Wheatstone bridge fashion and in contact with contact areas 80, 81, 82 and 83 via interconnection lines 84-87. Further, the contact areas 80, 81, 82 and 83 are interconnected with the electronic circuitry 70 via wires 88, 89, 90 and 91, respectively. Although only two excitation resistors 98 and 99 have been shown, the present embodiment is an example only, and a different number of pulse heated resistors may be envisaged. In the piezo-resistor assembly 92, a Wheatstone bridge structure is provided. The piezo-resistors 93 and 95 are transversal resistors, and the piezoresistors 94 and 96 are longitudinal resistors. However, a detector couple like piezo resistors 32 and 33 of fig. 4 could be envisaged in an alternative of the invention as shown in fig. 7.

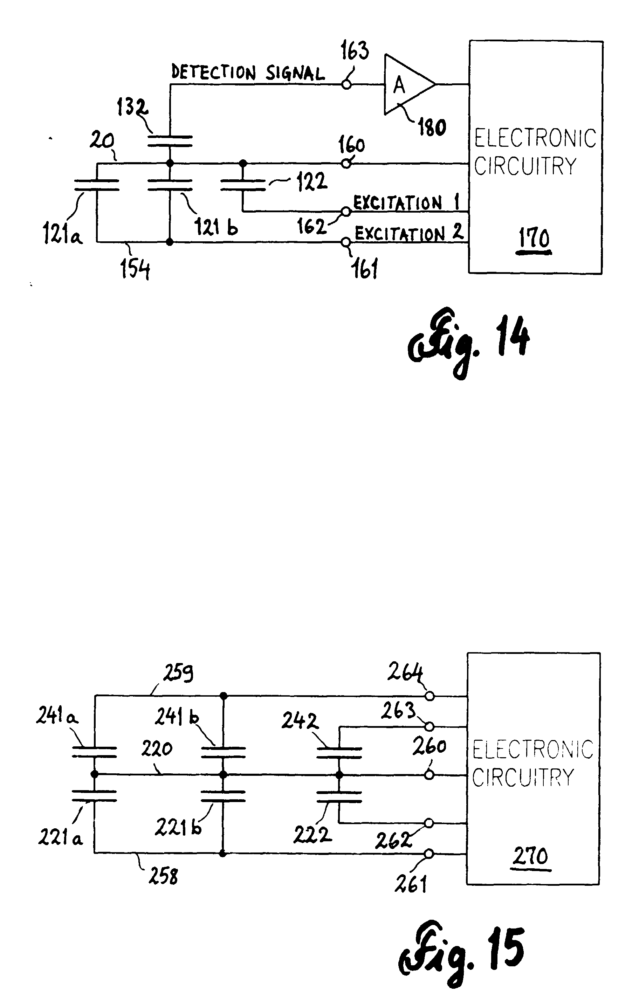

The electronic circuitry 70, as well as corresponding circuitry 40 of fig. 4, circuitry 170 of fig. 14, or circuitry 270 of fig. 15 are all capable of producing alternating or pulsed excitation signal in electrical current or voltage form, and further have means for detecting changes in detector output as a result of applied forces to the beam mass 20. The specific means for producing such excitation signals as well as detecting detector output and any changes in detector output are all of a type well familiar to an expert in the art.

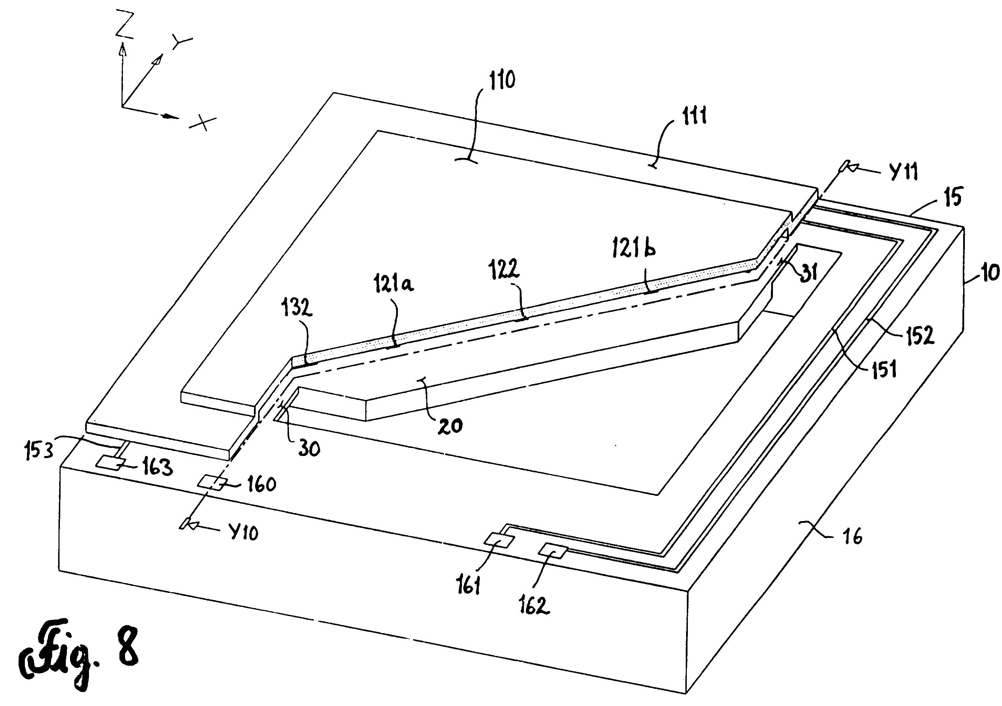

It will now be explained how the embodiment example of fig. 1 and resonant mode 9 of fig. 3 can be realized by using electrostatic force as excitation mode and capacitance change as detection mode, with reference to a third detailed embodiment shown in fig. 8. This embodiment is based on the same type of silicon substrate 15 with the same flexible and electrically conductive mass 20 suspended by the two flexible and conductive springs 30 and 31 at opposite sides of the mass, these springs being fixed to the rigid frame 16 of the substrate 15. An undoped semi-insulating poly-silicon lid 110 is built over the area of the mass 20 and the springs 30 and 31 at a short distance therefrom, supported by and resting on the frame 16 and covered by an insulating layer (not shown). A cross-section Y10-Y11 is made through the lid 110 along planes perpendicular to the plane of the surface of the mass 20 and springs 30, 31 showing excitation electrodes 121a, 121b and 122 for enforcing vibration mode 9 and electrode 132 to act as a detector capacitor. These electrodes and their interconnection lines 151, 152 and 153 are made on the bottom side surface of the poly-silicon lid as doped low-ohmic poly-silicon conductors or hightemperature resistance thin-film metal such as tungsten with pattern as shown in fig. 8. These lines 151-153 connect with respective electrical contact areas 161, 162 and 163. Electrodes 121a and 121b are interconnected by conductor 154. The N-type doped electrical conductive mass 20 and springs 30 and 31 can be connected via the contact area 160 and form a common electrode for the excitation electrodes 121a, 121b, 122 and also form the second electrode for the detection capacitor with its first electrode 132. Electronic 170 circuitry (as will be explained in connection with fig. 14) can then be coupled to the device of this embodiment by electrical connections through the contact areas 160, 161, 162 and 163 in a similar way as given in the example of fig. 4.

Excitation of resonant mode 9 can now be done by applying voltage pulses to the excitation electrodes at a frequency equivalent to the resonance frequency of resonant mode 9. Electrode 122 is pulsed with voltage pulses 180 degree phase shifted compared to the voltage pulses applied to electrodes 121a and 121b. The electric field between the electrodes and the mass will set up electrostatic forces between the electrodes and the mass, thereby causing a bending of the mass in the direction of the electrical field, and thereby enforcing vibrations in the mass-spring system at the frequency of vibration mode 9. Since the acceleration sensitivity is defined by the mechanical dimensions and the elastic properties of silicon only and not by the electrical parts, the sensitivity of this embodiment will be the same as for the embodiment of fig. 2 with the same mechanical dimensions of the mass-spring system.

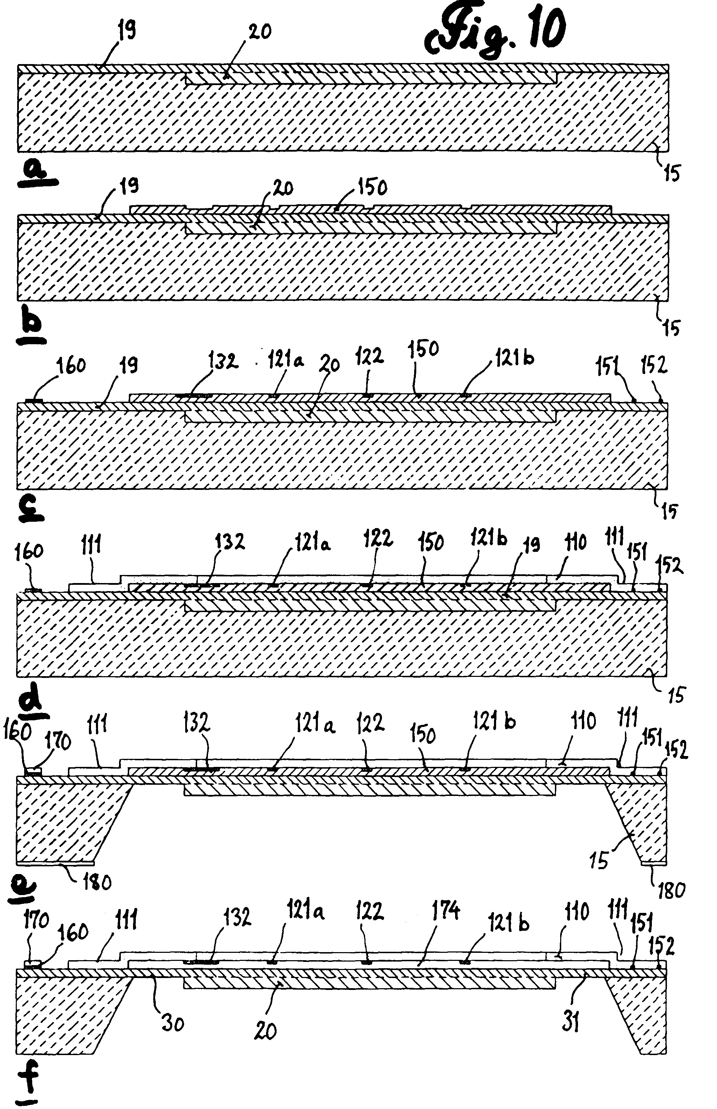

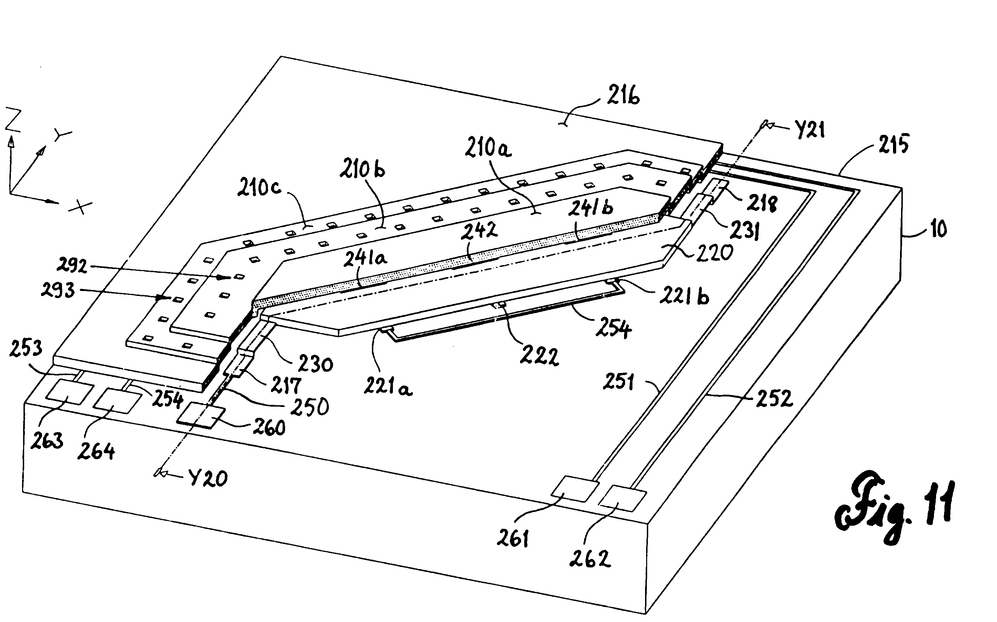

The detailed embodiment of force transducer according to fig. 8 can be manufactured by using conventional silicon wafer processing method and silicon micromachining technology. The processing method is more fully understood by reference to fig. 10, and with further reference to cross-section Y10-Y11 of fig. 8. Fig. 10f shows the cross-sectional view Y10-Y11 of fig. 8 . Processing is started on a <1-0-0> P-type silicon substrate 15 as for the embodiment of fig. 4. The result of the first two main steps are shown on fig. 10a and are to form the thickness T1 of the mass and the thickness T2 of the springs as N-type areas to make possible selective etching of the P-type silicon and stop the etch against the PN-junction at a later step in the process sequence. By standard photolithographic masking and etching steps the pattern of the mass 20 is defined, doped by ion implantation and diffused to the correct depth corresponding to mass thickness T1 and then followed by an additional fotoetching and doping step for the pattern of the springs but leaving undoped P-areas around the mass and along the sides of the springs to allow at a later stage the complete mass-spring system to be etched to the original surface of the substrate 15 by etch-stop against PN-junction process. In fig. 10b a pattern of oxide 150 with high etch-rate in hydrofluoric acid is deposited by low-temperature vapour deposition (LTO) and formed by standard photoetching techniques to be used as a sacrificial layer at a later stage in the process sequence. In fig. 10c is shown the electrically conductive poly-silicon or tungsten electrodes 121a, 121b, 122, 132 as well as the complete interconnection pattern of fig. 8 including all the interconnection lines 151, 152, 153 and 154 of which only lines 151 and 152 appear in section Y10-Y11 of fig. 8. In the following steps shown in fig. 10d the semi-insulating undoped poly-silicon material for the lid is deposited and formed over the sacrificial layer 150, the electrodes and the support frame for the lid 111. Holes are formed in this semi-insulating poly-silicon at the areas of the electrical contacts regions 160, 161, 162 and 163. The next steps as shown in figs. 10d and 10e are now to form aluminium electrical contacts 170, 171,172, 173 onto the contact regions 160, 161, 162 , 163 (only contact 170 has been shown with corresponding region 160) and performing the etch-stop process to remove P-type silicon all the way to the PN-junction in the substrate around the mass 20 and the springs 30,31 by using an etchmask 180. In this etch step the P-type silicon is removed around the mass 20 and along the sides of the springs 30, 31 leaving and exposing the sacrificial layer 150 at these areas. In the last step as shown in fig. 11f the sacrificial oxide layer 150 is removed in hydrofluoric acid HF by masking the front side of the wafer with its metal with a polyimide which is removed after the completion of the etching of the sacrificial layer 150. This completes the processing and leaves an air space 174 between the lid 110 and the electrodes 121a, 121b, 122, 132 and interconnection lines 151, 152, 152, 154 on the lid 110 and at the same time enabling the mass-spring system to freely move in a controlled fashion within said space. This detailed embodiment can now be built into a system including proper electronic circuitry that is needed to drive and keep the mass-spring system in its resonance mode and to condition the electrical output signal.

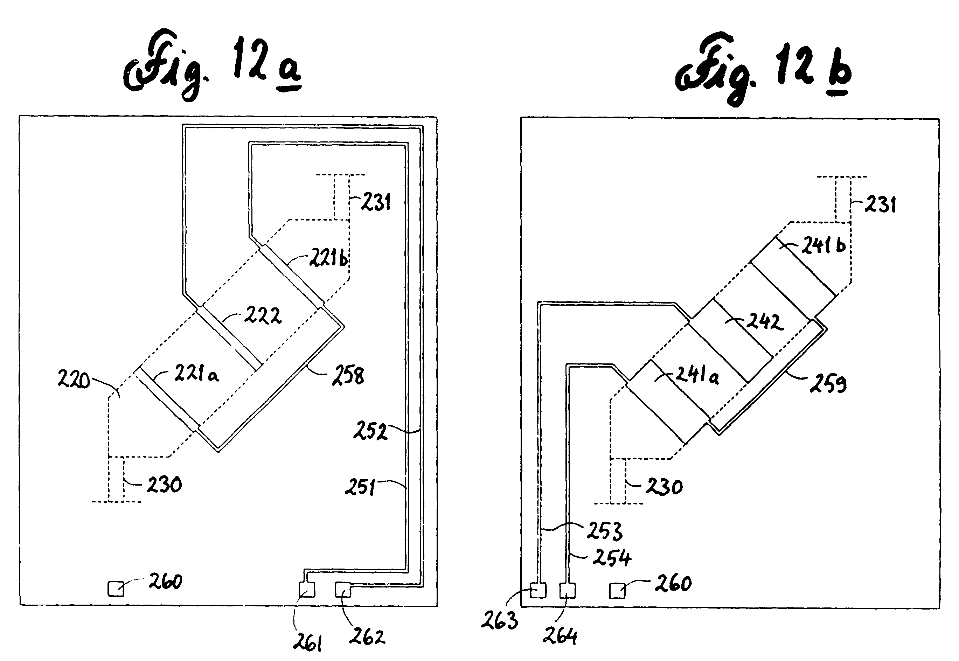

The embodiment of fig. 1 and resonant mode of fig. 3 will now be further described in relation to the embodiment of fig. 11, i. e. by using electrostatic force as excitation mode and capacitance change as detection mode, thus describing a fourth detailed embodiment of the invention. This embodiment utilizes a different method by using poly-silicon material in the flexible mass and in the springs. This method allow the embodiment to be integrated with electronic circuitry on a single chip by adding extra process steps to an integrated circuit process, but can also be built as a separate sensor chip with associated electronic circuitry connected thereto. Referring to fig. 11 a flexible and electrically conductive mass 220 is suspended by means of two flexible, electrically and conductive springs 230 and 231 at opposite sides of the mass. These springs are fixedly connected to the substrate 215 at anchor areas 217 and 218. The mass-spring system is provided with air space adjacent both surfaces thereof to be freely suspended between the substrate 215 and a lid 210. The lid 210 is made of undoped semi-insulating poly-silicon with different sections 210a, 210b and 210c built over and at a short distance from the mass 220 and the springs 230 and 231 and supportedly and resting on the substrate 215 with its anchor area 216. The cross-section Y20-Y21 is made through the lid 210 along planes perpendicular to the surface plane of the mass and springs. The substrate supports excitation electrodes 221a and 221b coupled together by interconnection line 254 and excitation electrode 222 for enforcing the vibration mode illustrated in fig. 3 by means of electrostatic force over the narrow air gap provided between these electrodes and the mass-spring system 220, 230, 231. These electrodes and their interconnection lines 251, 252 and 253 as also shown in fig. 12a are made on the surface of the substrate 215 and placed at the area of maximum deflection of the mass 220 for the resonant mode shown in fig. 3. Capacitive plates 241a and 241b and 242 are located on the bottom surface of an uppermost located midsection 210a of the lid 210 and form with the electrically conductive mass 220 capacitors with variable capacitance values, the mass 220, thus forming a single counter electrode and the air gap between the mid section 210a and the mass forming the dielectric of the capacitors thus created. The single common electrode created by the mass 220 is electrically connected to contact area 260 via spring 230, contact area 217 and interconnection line 250. The pattern of the capacitance plates 241a, 241b coupled together with interconnection line 259 and plate 242 with interconnection lines 253 and 254 to electrical connection and wire bonding areas 263 and 264 are shown in fig. 12b. The electrode and interconnections pattern of fig. 12a and fig. 12b are most effectively made of doped conductive poly-silicon. Electrical circuitry 270 (as explained further in connection with figure 15) can now be coupled to this mass-spring system by electrical connections to the contact areas 260, 261, 262, 263 and 264 in a similar way as given in the example of fig. 5.

Excitation of resonant mode according to fig. 3 for this third embodiment according to fig. 11 can now be done by voltage pulses to the excitation electrodes 221a, 221b, 222 at a frequency equivalent to the resonant mode frequency. Electrode 222 is pulsed with voltage pulses 180 degree phase shifted relative to the voltage pulses applied to electrodes 221a and 221b. The electric field between the electrodes 221a, 221b and 222 and the mass 220 will set up electrostatic forces between these electrodes and the mass 220 and cause a bending of the mass in the direction of the electrical field hereby enforcing the vibrations in the mass-spring system 220, 230, 231, at the vibration mode frequency according to fig. 3. The acceleration sensitivity of this fourth embodiment is defined by the mechanical dimensions and the elastic properties of the poly-silicon mass-spring system only and not by the electrical parts included therein.

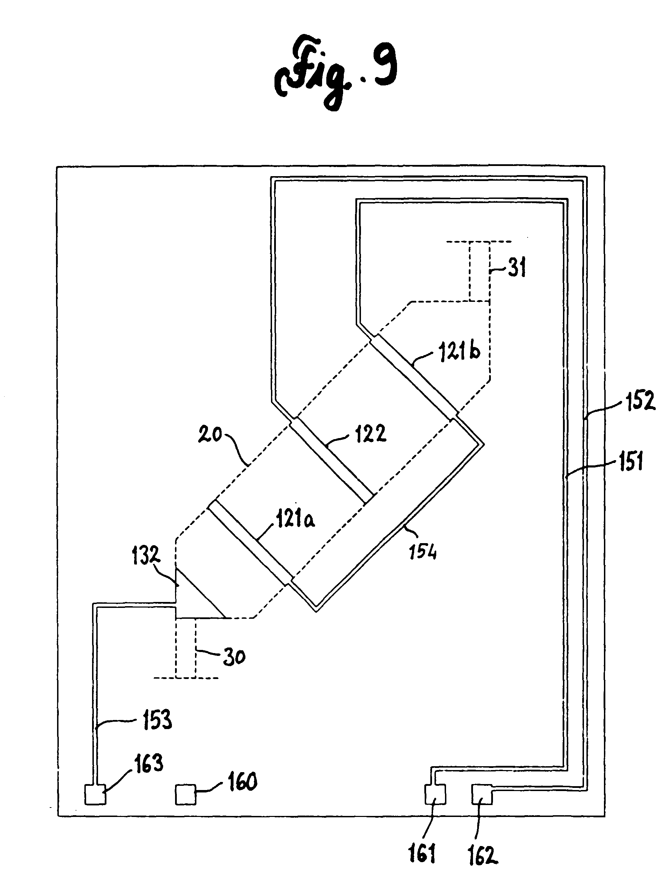

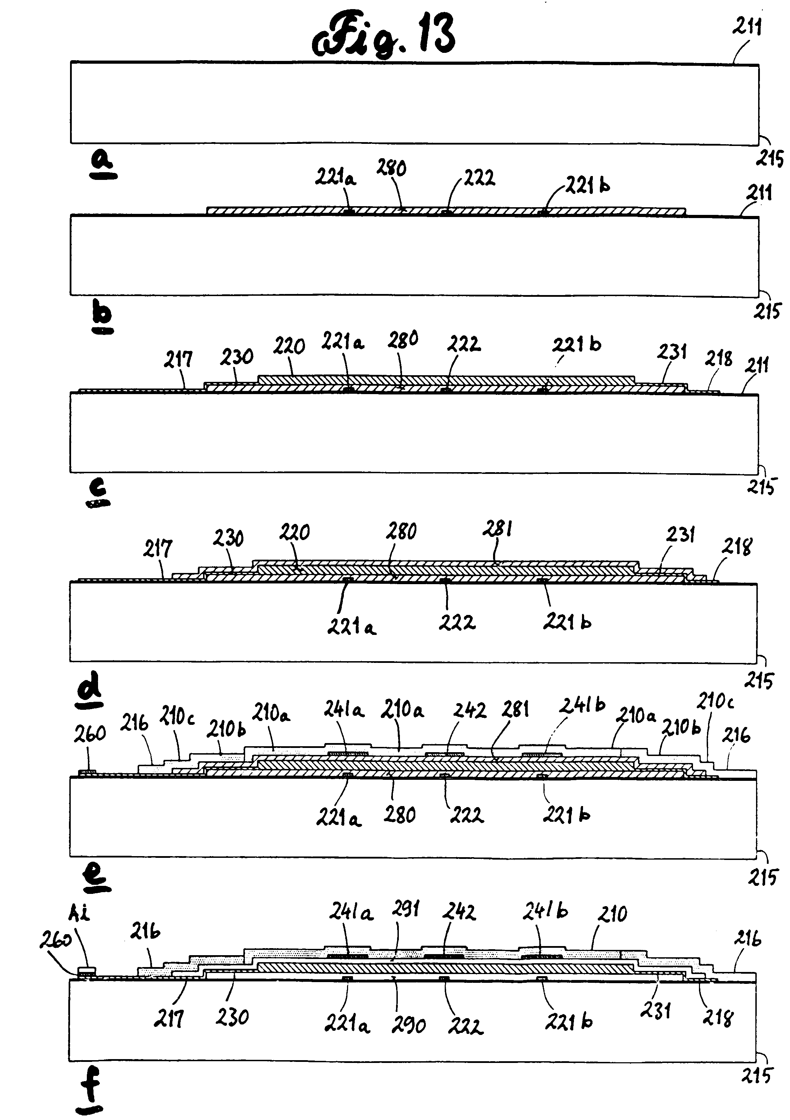

The force transducer of fig. 11 can be manufactured by using conventional silicon wafer processing method and surface micromachining by using sacrificial layers, as exemplified in fig. 13. Fig. 13 shows a cross-sectional view along planes denoted by line Y20-Y21 in fig. 9. Fig. 13 thus shows the main process steps that are used. Processing is started on a silicon substrate 215 with a passivation layer 211 on top as shown in fig. 13a. The substrate 215 could possibly contain all or parts of electronic circuitry to start and maintain the mass-spring system in its resonant mode and other signal conditioning circuitry to be used together with this embodiment of the invention. In fig. 13b the pattern of the excitation electrodes 221a, 221b and 222 and their interconnection lines (as shown in fig. 12a) are formed in a layer of doped poly-silicon. On top of this the first sacrificial oxide layer 280 is deposited by chemical vapour deposition and formed by standard photoetching techniques in the area covered by the lid parts 210a and 210b shown in fig. 11. In fig. 13c the shape or pattern of the springs 230 and 231 with their anchor areas 217 and 218 is formed by deposition of a thin layer of poly-silicon and photoetching this layer followed by an additional deposition of a thicker conductive polysilicon layer to form the mass 220 of the resonating mass-spring system. The poly-silicon mass and springs may also be made by depositing and etching the mass first and the springs and their support areas thereafter. A second sacrificial layer 281 is thereafter deposited and formed as shown in fig. 13d at the area covered by the lid parts 210a, 210b and 210c of fig. 11. On top of this second sacrificial 281 the capacitor plates 241a, 241b and 242 and their respective interconnection lines as shown in fig. 12b are formed by deposition of a layer of conductive doped poly-silicon and photoetching the required pattern in this layer as shown in fig 13e followed by the deposition of a thicker layer of undoped semi-insulating poly-silicon that is formed in the pattern of the lid 210a, 210b, 210c, the anchor area 216 of the lid and including the etching of holes in the layer down to tile electrical connection areas 260, 261, 262, 263 and 264. By reference to fig. 13f the processing of this third embodiment of the invention can completed by making depositing and etching the aluminium pads 270, 271, 272, 273 and 274 (only pad 270 being shown on fig. 13f) at the electrical connection areas 260, 261, 262, 263 and 264 and by etching many small holes 292 and 293 through the lid 210 as shown in the areas 210b and 210c of fig. 11, followed by etching the sacrificial layers in HF by masking the aluminium connection pads and lines with polyimide and removing this polyimide after completion of the etching of the sacrificial layer 280. As shown in fig. 13f the present embodiment is now completed leaving air volumes 290 and 291 around the mass-spring system 220, 230, 231, thus providing a suspended system with the spring 230 effectively anchored to the substrate 215 at anchor area 217, spring 231 anchored to the substrate at anchor area 218 and with the thin flexible mass 220 free to move in the z-direction, i.e. right angles to the substrate, that direction being the sensing direction of the present embodiment.

Fig. 14 shows a high level electronic circuit diagram to be used for the embodiment of fig. 8. Excitation voltage signals are supplied from the electronic circuitry 170 via contact areas 160, 161 and 162 to the electrodes of the first capacitor 121a and the electrodes of the second capacitors 121b 180 degrees out of phase with the excitation signal supplied to electrodes of the third capacitor 122. Movement of the mass 20 will lead to a change in the distance between the end of the mass and the electrode of the detection capacitor 132, resulting in capacitance change with the same frequency as applied mechanical vibration. The signal from the capacitor 132 is fed into a charge amplifier180 via contact area 163 and then to the electronic circuitry 170 built as a self oscillating loop or a phase locked loop.

Fig. 15 shows a high level electronic circuit diagram to be used for the embodiment of fig. 11. Excitation voltage signals from the electronic circuitry 270 via contact areas 260, 261 and 262 are supplied to the electrodes of the first capacitor 221a and the electrode of the second capacitors 221b 180 degrees out of phase with the excitation signal supplied to electrode of the third capacitor 222. The resonant vibrations in the mass-spring system will lead to a deflection along the mass 20 as shown in fig. 3b leading to a time variable change in the distance between the mass 20 and the opposite electrode of capacitors 241a, 241b and 242 with signal on capacitor 242 180 degrees out of phase with signal on capacitors 241a and 241b. The signals from the detection capacitors 241a, 241b and 242 are fed into the electronic circuitry 270 via contact areas 260, 263 and 264 that is built as a self oscillating loop or a phase locked loop.

Thus, in its preferred modes, the invention provides a defined resonant vibrational mode in the entire force sensitive mass-spring system in such a way that the proof mass is thin enough to flex or/and twist. A resonant mode is thus set up as an "integrated" movement of the spring and the mass. Acceleration or fluidic pressure force will change the mechanical stress and the stiffness of the springs and the mass and hereby causing a change of the resonance frequency of the mass-spring system.

If the proof mass has a thickness so that it effectively acts as a rigid body, then vibrations are set up by translational or/and rotational movement of the proof mass interactively with the springs flexing and/or twisting. Acceleration or other external sources of force will change the stress in the springs hereby causing a change in the stiffness of the springs resulting in a change in the resonance frequency of the enforced vibrational mode. The seismic mass-spring system itself is by design identically the same as the vibrating mass-spring system that is set into and held in a resonant mode having low damping (high Q-factor).

## Claims

1. A force sensor device for sensing force due to changes in acceleration or pressure, comprising at least one proof mass (20;220) in the form of beam of silicon material being subjected to vibration at a resonant mode frequency and being suspended by means of two or more silicon spring means (30,31;230,231) connecting the beam (20;220) at opposite ends to a supporting frame (16;216), the beam (20;220) being of a first thickness and having an oblong form, each of said silicon spring means (30,31;230,231) being of a second, smaller thickness and flush with a surface of said beam (20;220), means (21a,21b,22;121a,121b,122;221a,221b,222) for creating expansion an contraction forces within said beam (20;220) resulting in any controlled vibration mode of the beam (20;220), and means (32,33;92;132;241a,241b,242), being provided for detecting vibration frequency changes in said beam (20;220) due to applied forces acting on said sensor device and related of change of spring stiffness.

2. A device according to claim 1, wherein said beam (20) is provided with electrical resistive means (21a,21b,22), which subject to application of alternating or pulsating electric current via said silicon spring means (30,31) create corresponding heat generation in said beam (20) to provide said expansion and contraction forces within said beam (20).

3. A device according to claim 1, wherein said beam (20;220) forms part of capacitor means, said means for creating expansion and contraction forces having applied thereto alternating or pulsating voltage create corresponding varying electrostatic field forces at selected locations along said beam (20;220) to provide said expansion and contraction forces within said beam (20;220).

4. A device according to claim 1 or 2, wherein said means for detecting include one or more piezo-resistive elements (32;93-96) located in said silicon spring means (30,31).

5. A device according to claim 1 or 3, wherein said means for detecting include means for detecting a capacitance change between said beam (20;220) and a reference capacitor member (132;241a,241b,242) adjacent thereto.

6. A device according to claim 3 or 5, wherein part (121a,121b,122;241a,241b,242) of said capacitor means is located on a lid (110;210) covering said beam (20;220) with an air space therebetween and adjacent thereto.

7. A device according to claim 6, wherein said beam (220) is suspended on a frame part of a substrate (215) with an air space between said beam (220) and a surface of said substrate (215), said beam (220) forming a common capacitor electrode for both said part (241a,241b,242) of said capacitor means located on said lid (210) and further capacitor part means (221a,221b,222) located on said substrate (215) surface.

8. A device according to claim 1, wherein said excitation and detection means are located at a regions midway between vibration nodes of said beam (20;220).

9. A force sensor device for sensing force due to changes in acceleration or pressure, comprising at least one proof mass (20) in the form of a beam of silicon material being subjected to vibration at a resonant mode frequency and being suspended by means of two or more silicon spring means (30,31) connecting the beam (20) at opposite ends to a supporting frame (16), the beam (20) being of a first thickness and having an oblong form, each of said silicon spring means (30,31) being of a second, smaller thickness and flush with a surface of said beam (20), means (97) for creating expansion and contraction forces within a first (31) of said silicon spring means (30,31) resulting in any controlled vibration mode of the beam (20), and means (92) being provided for detecting vibration frequency changes in said beam (20) due to applied forces acting on said sensor device and related of change of spring stiffness.

10. A device according to claim 9, wherein said first silicon spring means (31) is provided with electrical resistive means (98,99), which subject to application of alternating or pulsating electric current via said silicon spring means (30,31) create corresponding heat generation in said first silicon spring means (31) to provide said expansion and contraction forces therein.

11. A device according to claim 9 or 10, wherein said means (92) for detecting include one or more piezo-resistive elements (93-96) located in a second (30) of said silicon spring means (30,31).

12. A device according to claim 4 or 11, wherein said one or more piezoresistive elements (32;93-96) electrically form at least part of a Wheatstone bridge structure.

13. A device according to claim 1 or 9, further comprising electronic circuitry (40;170;270) connected to said excitation means (21a,21b,22;121a,121b,122;221a,221b,222) and said detection means (32,33;92;132;241a,241b,242), said circuitry (40;170;270) having means providing excitation signals to said excitation means, means for detecting output signals from said detection means in a continuous self-test mode, and means for initiating an operation signal if a state of change in said output signal is above a specific threshold.

14. A device according to claim 13, wherein said beam (220), said springs (230,231), said excitation means (221a,221b,222), said detection means (241a,241b,242) and said electronic circuitry (270) are located on a common silicon substrate.

15. A device according to claims 1 to 14, wherein said beam (20;220) is polygonal.

16. A device according to claim 15, wherein said beam (20;220) is hexagonal.

17. A device according to claim 16, wherein said silicon spring means (30,31;230,231) at one end of a short side of said beam (20;220) being a right angles thereto, and wherein said silicon spring means (30,31;230,231) are located at the most spaced apart regions of said beam (20;220).

18. A device according to claims 1 to 17, wherein said vibration of said beam (20;220) is translational.

19. A device according to claims 1 to 17, wherein said vibration is a twisting motion.

20. A device according to claims 1 or 19, wherein said beam (20;220) and said springs (30,31;230,231) are made by an etch-stop process against a pn-junction.

## Patentansprüche

1. Kraftsensorvorrichtung zur Erfassung einer Kraft infolge von Beschleunigungs- oder Druckveränderungen, umfassend: mindestens eine Prüfmasse (20; 220) in Form einer Stange aus Siliziummaterial, die einer Schwingung bei einer Resonanzwellenfrequenz unterliegt und die mittels zweier oder mehrerer Siliziumfedermittel (30; 31; 230; 231), die die Stange (20; 220) an gegenüberliegenden Enden mit einem Stützrahmen (16; 216) verbinden, schwebend gehalten wird, wobei die Stange (20; 220) eine erste Stärke und eine längliche Form aufweist und jedes der Siliziumfedermittel (30, 31; 230, 231) eine zweite geringere Stärke aufweist und mit einer Oberfläche der Stange (20; 220) bündig abschließt, Mittel (21a, 21b, 22; 121a, 121b, 122; 221a, 221b, 222) zur Erzeugung von Expansions- und Kontraktionskräften innerhalb der Stange (20; 220), die eine gesteuerte Eigenschwingung der Stange (20; 220) zur Folge haben, sowie Mittel (32, 33; 92; 132; 241a, 241b, 242), die zur Erfassung von Schwingungsfrequenzänderungen in der Stange (20; 220) vorgesehen sind, die infolge von angewendeten Kräften auftreten, die auf die Sensorvorrichtung einwirken, und zu Veränderungen der Federsteifigkeit in Beziehung stehen.

2. Vorrichtung nach Anspruch 1, wobei die Stange (20) mit elektrischen Widerstandsmitteln (21a, 21b, 22) versehen ist, die bei Anlegen eines elektrischen Wechselstromes oder eines pulsierenden Stromes über die Siliziumfedermittel (30, 31) eine entsprechende Hitzeerzeugung in der Stange (20) hervorrufen, um die Expansions- und Kontraktionskräfte innerhalb der Stange (20) bereitzustellen.

3. Vorrichtung nach Anspruch 1, wobei die Stange (20; 220) Teil eines Kondensatormittels ist, wobei an das Mittel zur Erzeugung von Expansions- und Kontraktionskräften eine Wechselspannung oder pulsierende Spannung angelegt wird, die entsprechende variierende elektrostatische Feldkräfte an ausgewählten Positionen entlang der Stange (20; 220) erzeugt, um die Expansions- und Kontraktionskräfte innerhalb der Stange (20; 220) bereitzustellen.

4. Vorrichtung nach Anspruch 1 oder 2, wobei die Mittel zur Erfassung ein oder mehrere Piezowiderstandselemente (32; 93 - 96) umfassen, die in den Siliziumfedermitteln (30, 31) angeordnet sind.

5. Vorrichtung nach Anspruch 1 oder 3, wobei die Mittel zur Erfassung Mittel zur Erfassung einer Kapazitätsänderung zwischen der Stange (20; 220) und einem Bezugskondensatorelement (132; 241a, 241b, 242) umfassen, das benachbart dazu angeordnet ist.

6. Vorrichtung nach Anspruch 3 oder 5, wobei ein Abschnitt (121a, 121b, 122; 241a, 241b, 242) des Kondensatormittels auf einem Deckel (110; 210) angeordnet ist, der die Stange (20; 220) abdeckt, wobei sich ein Luftraum dazwischen und benachbart dazu befindet.

7. Vorrichtung nach Anspruch 6, wobei die Stange (220) auf einem Rahmenabschnitt aus einem Substrat (215) mit einem Luftraum zwischen der Stange (220) und einer Oberfläche des Substrats (215) schwebend gehalten wird, wobei die Stange (220) eine gemeinsame Kondensatorelektrode bildet sowohl für den Abschnitt (241a, 241b, 242) des Kondensatormittels, das auf dem Deckel (210) angeordnet ist, als auch für den Abschnitt (221a, 221b, 222) des Kondensatormittels, das auf der Substratoberfläche (215) angeordnet ist.

8. Vorrichtung nach Anspruch 1, wobei die Erregungs- und Erfassungsmittel in einem Bereich in der Mitte zwischen Schwingungsknoten der Stange (20; 220) angeordnet sind.

9. Kraftsensorvorrichtung zur Erfassung einer Kraft infolge von Beschleunigungs- oder Druckveränderungen, umfassend: mindestens eine Prüfmasse (20) in Form einer Stange aus Siliziummaterial, die einer Schwingung bei einer Resonanzwellentfrequenz unterliegt und die mittels zweier oder mehrerer Siliziumfedermittel (30; 31) schwebend gehalten wird, die die Stange (20) an gegenüberliegenden Enden mit einem Stützrahmen (16) verbinden, wobei die Stange (20) eine erste Stärke und eine längliche Form aufweist und jedes der Siliziumfedermittel (30, 31) eine zweite geringere Stärke aufweist und mit einer Oberfläche der Stange (20) bündig abschließt, Mittel (97) zur Erzeugung von Expansions- und Kontraktionskräften innerhalb eines ersten (31) der Siliziumfedermittel (30, 31), die eine gesteuerte Eigenschwingung der Stange (20) zur Folge haben, sowie Mittel (92), die zur Erfassung von Schwingungsfrequenzänderungen in der Stange (20) vorgesehen sind, die infolge von angewendeten Kräften auftreten, die auf die Sensorvorrichtung einwirken, und zu Veränderungen der Federsteifigkeit in Beziehung stehen.

10. Vorrichtung nach Anspruch 9, wobei das erste Siliziumfedermittel (31) mit elektrischen Widerstandsmitteln (98, 99) versehen ist, die bei Anlegen eines elektrischen Wechselstromes oder eines pulsierenden Stromes über die Siliziumfedermittel (30, 31) eine entsprechende Hitzeerzeugung im ersten Siliziumfedermittel (31) hervorrufen, um darin die Expansions- und Kontraktionskräfte bereitzustellen.

11. Vorrichtung nach Anspruch 9 oder 10, wobei die Mittel (92) zur Erfassung ein oder mehrere Piezowiderstandselemente (93 - 96) umfassen, die in einem zweiten (30) der Siliziumfedermittel (30, 31) angeordnet sind.

12. Vorrichtung nach Anspruch 4 oder 11, wobei das Piezowiderstandselement oder die Piezowiderstandselemente (32, 93 - 96) elektrisch mindestens einen Teil einer Wheatstone-Brückenstruktur bilden.

13. Vorrichtung nach Anspruch 1 oder 9, weiterhin umfassend: elektronische Schaltkreise (40; 170; 270), die an die Erregungsmittel (21a, 21b, 22; 121a, 121b, 122; 221a, 221b, 222) und an die Erfassungsmittel (32, 33; 92; 132; 241a, 241b, 242) angeschlossen sind, wobei die Schaltkreise (40; 170; 270) Mittel zur Bereitstellung von Erregungssignalen für die Erregungsmittel aufweisen, Mittel zur Erfassung von Ausgangssignalen aus den Erfassungsmitteln in einem fortlaufenden Selbsttestmodus sowie Mittel zur Auslösung eines Betriebssignals, wenn ein Veränderungszustand im Ausgangssignal oberhalb eines bestimmten Schwellenwertes liegt.

14. Vorrichtung nach Anspruch 13, wobei die Stange (220), die Federn (230, 231), die Erregungsmittel (221a, 221b, 222), die Erfassungsmittel (241a, 241b, 242) und der elektronische Schaltkreis (270) auf einem gemeinsamen Siliziumsubstrat angeordnet sind.

15. Vorrichtung nach Anspruch 1 bis 14, wobei die Stange (20; 220) polygonal ist.

16. Vorrichtung nach Anspruch 15, wobei die Stange (20; 220) hexagonal ist.

17. Vorrichtung nach Anspruch 16, wobei die Siliziumfedermittel (30, 31; 230, 231) an einem Ende einer kurzen Seite der Stange (20; 220) rechtwinklig dazu angeordnet sind und wobei die Siliziumfedermittel (30, 31; 230, 231) an den am meisten voneinander entfernten Bereichen der Stange (20; 220) angeordnet sind.

18. Vorrichtung nach Anspruch 1 bis 17, wobei die Schwingung der Stange (20; 220) eine Translationsschwingung ist.

19. Vorrichtung nach Anspruch 1 bis 17, wobei die Schwingung eine Torsionsbewegung ist.

20. Vorrichtung nach Anspruch 1 bis 19, wobei die Stange (20; 220) und die Federn (30, 31; 230, 231) durch ein Ätzstoppverfahren gegen eine pn-Grenzschicht hergestellt werden.

## Revendications

1. Dispositif capteur de force servant à détecter une force due à des variations d'accélération ou de pression, comprenant au moins une masse d'épreuve (20 ; 220) se présentant sous la forme d'une barre de matière silicium qui est soumise à des vibrations à une fréquence de mode de résonance et qui est suspendue par l'intermédiaire de deux ou plus de deux moyens formant des ressorts (30, 31 ; 230, 231) de silicium qui relient la barre (20 ; 220), au niveau de ses extrémités opposées, à un bâti de support (16 ; 216), la barre (20 ; 220) ayant une première épaisseur et possédant une forme allongée, chacun desdits moyens ressorts de silicium (30, 31 ; 230, 231) étant d'une deuxième épaisseur, plus petite, et affleurant à la surface de ladite barre (20 ; 220), un moyen (21a, 21b, 22 ; 121a, 121b, 122; 221a, 221b, 222) servant à créer des forces de dilatation et de contraction à l'intérieur de la barre (20 ; 220) qui provoquent un quelconque mode de vibration commandé de la barre (20 ; 220), et un moyen (32, 33 ; 92 ; 132 ; 241a, 241b, 242) qui est prévu pour détecter des variations de la fréquence de vibration dans ladite barre (20 ; 220) du fait de forces appliquées qui agissent sur ledit dispositif capteur et qui sont reliées à une variation de la raideur des ressorts.

2. Dispositif selon la revendication 1, où ladite barre (20) est dotée de moyens électriquement résistifs (21a, 21b, 22), qui, soumis à l'application d'un courant électrique alternatif ou pulsé via lesdits moyens (30, 31) ressorts en silicium, créent une production de chaleur correspondante dans ladite barre (20) de façon à produire lesdites forces de dilatation et de contraction à l'intérieur de ladite barre (20).

3. Dispositif selon la revendication 1, où ladite barre (20 ; 220) fait partie d'un moyen formant un condensateur, ledit moyen de création de forces de dilatation et de contraction, se voyant appliquer une tension alternative ou pulsée, crée des forces électrostatiques variables correspondantes en des emplacements sélectionnés le long de ladite barre (20 ; 220) de façon à produire lesdites forces de dilatation et de contraction à l'intérieur de ladite barre (20 ; 220).

4. Dispositif selon la revendication 1 ou 2, où ledit moyen de détection comporte un ou plusieurs éléments piézorésistifs (32 ; 93 à 96) placés dans lesdits moyens (30, 31) ressorts de silicium.

5. Dispositif selon la revendication 1 ou 3, où ledit moyen de détection comporte un moyen servant à détecter une variation de capacité entre ladite barre (20 ; 220) et un élément condensateur de référence (132 ; 241a, 241b, 242) qui lui est adjacent.

6. Dispositif selon la revendication 3 ou 5, où une partie (121a, 121b, 122; 241a, 241b, 242) dudit moyen condensateur est placée sur un couvercle (110 ; 210) couvrant ladite barre (20 ; 220) de manière à laisser un espace vide entre eux et adjacent à celle-ci.

7. Dispositif selon la revendication 6, où ladite barre (220) est suspendue sur une partie bâti d'un substrat (215) de façon qu'il y ait un espace vide entre ladite barre (220) et une surface dudit substrat (215), ladite barre (220) formant une électrode de condensateur commune pour à la fois ladite partie (241a, 241b, 242) dudit moyen condensateur placé sur ledit couvercle (210) et un autre moyen constituant une partie formant un condensateur (221a, 221b, 222) placé sur ladite surface du substrat (215).

8. Dispositif selon la revendication 1, où lesdits moyens d'excitation et de détection sont placés dans une région située à mi-chemin entre des noeuds de vibration de ladite barre (20 ; 220).

9. Dispositif capteur de force servant à détecter une force due à des variations d'accélération ou de pression, comprenant au moins une masse d'épreuve (20) se présentant sous la forme d'une barre de matière silicium qui est soumise à des vibrations à une fréquence de mode de résonance et qui est suspendue par l'intermédiaire de deux ou plus de deux moyens (30, 31) formant des ressorts de silicium qui connectent la barre (20), au niveau de ses extrémités opposées, à un bâti de support (16), la barre (20) ayant une première épaisseur et une forme allongée, chacun desdits moyens (30, 31) ressorts de silicium ayant une deuxième épaisseur, plus petite, et affleurant avec la surface de ladite barre (20), un moyen (97) servant à créer des forces de dilatation et de contraction à l'intérieur d'un premier (31) desdits moyens (30, 31) ressorts de silicium qui provoquent un quelconque mode de vibration commandé de la barre (20), et un moyen (92) qui est prévu pour détecter des variations de fréquence de vibration dans ladite barre (20) sous l'action de forces appliquées qui s'exercent sur ledit dispositif de détection et sont liées à une variation de la raideur des ressorts.

10. Dispositif selon la revendication 9, où ledit premier moyen (31) ressort de silicium est doté d'un moyen électriquement résistif (98, 99), qui, soumis à l'application d'un courant électrique alternatif ou pulsé via lesdits moyens (30, 31) ressorts de silicium, créent une production de chaleur correspondante dans ledit premier moyen (31) ressort de silicium afin d'y produire des forces de dilatation et de contraction.

11. Dispositif selon la revendication 9 ou 10, où ledit moyen (92) de détection comporte un ou plusieurs éléments piézorésistifs (93 à 96) placés dans un deuxième (30) desdits moyens (30, 31) ressorts de silicium.

12. Dispositif selon la revendication 4 ou 11, où ledit ou lesdits éléments piézorésistifs (32 ; 93 à 96) forment, électriquement, au moins une partie d'une structure de pont de Wheatstone.

13. Dispositif selon la revendication 1 ou 9, comprenant en outre un circuit électronique (40 ; 170 ; 270) connecté audit moyen d'excitation (21a, 21b, 22 ; 121a, 121b, 122 ; 221a, 221b, 222) et audit moyen de détection (32, 33 ; 92 ; 132 ; 241a, 241b, 242), ledit circuit (40 ; 170 ; 270) possédant des moyens qui fournissent des signaux d'excitation audit moyen d'excitation, des moyens permettant de détecter les signaux de sortie dudit moyen de détection suivant un mode d'autocontrôle continu, et des moyens servant à faire l'initialisation d'un signal de fonctionnement si un état de variation dudit signal de sortie se trouve au-dessus d'un seuil spécifique.

14. Dispositif selon la revendication 13, où ladite barre (220), lesdits ressorts (230, 231), ledit moyen d'excitation (221a, 221b, 222), ledit moyen de détection (241a, 241b, 242) et ledit circuit électronique (270) sont placés sur un substrat de silicium commun.

15. Dispositif selon les revendications 1 à 14, où ladite barre (20 ; 220) est polygonale.

16. Dispositif selon la revendication 15, où ladite barre (20 ; 220) est hexagonale.

17. Dispositif selon la revendication 16, où lesdits moyens (30, 31; 230, 231) ressorts de silicium situés à une extrémité d'un côté court de ladite barre (20 ; 220) font un angle droit avec celui-ci, et où lesdits moyens (30, 31 ; 230, 231) ressorts de silicium sont placés au niveau des régions mutuellement les plus éloignées de ladite barre (20 ; 220).

18. Dispositif selon les revendications 1 à 17, où ladite vibration de ladite barre (20 ; 220) est un mouvement de translation.

19. Dispositif selon les revendications 1 à 17, où ladite vibration est un mouvement de torsion.

20. Dispositif selon les revendications 1 à 19, où ladite barre (20 ; 220) et lesdits ressorts (30, 31 ; 230, 231) sont faits au moyen d'un processus d'arrêt de gravure contre une jonction PN.
